# EUROPEAN PATENT APPLICATION

(11) **EP 4 528 452 A1**
(43) Date of publication of application: **26.03.2025**
(21) Application number: 23890804.0
(22) Date of filing: 15.11.2023
(51) Int. Cl.: G06F 3/0482, G06F 3/04842

(54) **INTERACTION METHOD AND APPARATUS, ELECTRONIC DEVICE, STORAGE MEDIUM, AND PROGRAM PRODUCT**

(30) Priority: 15.11.2022 CN 202211430484
(71) Applicant: Beijing Zitiao Network Technology Co., Ltd., Beijing 100190 (CN)
(72) Inventor: FAN, Teng, Beijing 100028 (CN); WANG, Wei, Beijing 100028 (CN)
(74) Representative: Williams, Michael David
(86) International application number: PCT/CN2023/131744
(87) International publication number: WO 2024/104372

(57) **Abstract**

Provided in the embodiments of the present disclosure are an interaction method and apparatus, an electronic device, a storage medium, and a program product. The method comprises : in response to a list display operation of the current user, displaying a performance task execution request list of the current live streaming room, wherein the performance task execution request list is used for displaying at least some of performance task execution requests sent by audiences of the current live streaming room, and each performance task execution request is used for requesting the execution of a performance task; and in response to a request processing operation, processing a performance task execution request for the request processing operation. According to the embodiments of the present disclosure, performance task execution modes of a live streaming room can be enriched by using the technical solution.

## Description

This application claims priority to Chinese Patent Application No. 202211430484.4, filed on November 15, 2022, the entire disclosure of which is incorporated herein by reference as part of the present disclosure.

### TECHNICAL FIELD

The present disclosure relates to an interaction method, an apparatus, an electronic device, a storage medium, and a computer program product.

### BACKGROUND

At present, in some applications, an audience can request a song in a live-stream room. Accordingly, after the audience requests a song, the song requested by the audience can be added to a requested song list of the live-stream room, and songs are sung in an order of the requested song list. However, the aforementioned song requesting manner is very limited.

### SUMMARY

The embodiments of the present disclosure provide an interaction method, an apparatus, an electronic device, a storage medium, and a program product, to enrich the song-requesting methods in live stream rooms.

On the first aspect, embodiments of the present disclosure provide an interaction method, comprising: displaying a performance task execution request list of a current live-stream room in response to a list displaying operation of a current user, wherein the performance task execution request list is configured to show at least part of performance task execution requests sent by audiences of the current live-stream room, and the performance task execution requests are used for requesting execution of performance tasks; and in response to a request processing operation, processing a performance task execution request that the request processing operation targets.

On the second aspect, embodiments of the present disclosure further provide an interaction apparatus, comprising: a list display module configured to, in response to a list displaying operation of a current user, display a performance task execution request list of a current live-stream room, wherein the performance task execution request list is configured to show at least part of performance task execution requests sent by audiences of the current live-stream room; and the performance task execution requests are used for requesting execution of performance tasks; and a request processing module configured to, in response to a request processing operation, process a performance task execution request that the request processing operation targets.

On the third aspect, embodiments of the present disclosure further provide an electronic device, comprising: at least one processor; and a memory in communication connection with the at least one processor, wherein the memory stores a computer program executable by the at least one processor; and the computer program is executed by the at least one processor to enable the at least one processor to perform the interaction method provided by the embodiments of the present disclosure.

On the fourth aspect, embodiments of the present disclosure further provide a computer-readable storage medium, storing computer instructions which, when executed by a processor, implement the interaction method provided by the embodiments of the present disclosure.

On the fifth aspect, embodiments of the present disclosure further provide a computer program product, comprising a computer program which, when executed by a computer, causes the computer to implement the interaction method provided by the embodiments of the present disclosure.

### BRIEF DESCRIPTION OF DRAWINGS

The above and other features, advantages and aspects of different embodiments of the present disclosure will become more apparent from the accompanying drawings and the following specific embodiments. Identical or similar reference numerals indicate identical or similar elements throughout the drawings. It will be understood that the drawings are illustrative, and components and elements are not necessarily drawn to scale.
Fig. 1 is a flowchart of an interaction method provided by an embodiment of the present disclosure;
Fig. 2 is a flowchart of another interaction method provided by an embodiment of the present disclosure;
Fig. 3 is a schematic diagram of displaying a song requesting control provided by an embodiment of the present disclosure;
Fig. 4 is a schematic diagram of displaying a song list provided by an embodiment of the present disclosure;
Fig. 5 is a schematic diagram of displaying a performance task execution request list provided by an embodiment of the present disclosure;
Fig. 6 is a schematic diagram of displaying a play list provided by an embodiment of the present disclosure;
Fig. 7 is a flowchart of yet another interaction method provided by an embodiment of the present disclosure;
Fig. 8 is a schematic diagram of displaying another song requesting control provided by an embodiment of the present disclosure;
Fig. 9 is a schematic diagram of displaying another play list provided by an embodiment of the present disclosure;
Fig. 10 is a schematic diagram of displaying yet another song requesting control provided by an embodiment of the present disclosure;
Fig. 11 is a schematic diagram of displaying another song list provided by an embodiment of the present disclosure;
Fig. 12 is a schematic diagram of displaying another performance task execution request list provided by an embodiment of the present disclosure;
Fig. 13 is a schematic diagram of displaying yet another play list provided by an embodiment of the present disclosure;
Fig. 14 is a structural block diagram of an interaction apparatus provided by an embodiment of the present disclosure; and
Fig. 15 is a structural schematic diagram of an electronic device provided by an embodiment of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be achieved in various forms and should not be construed as being limited to the embodiments described here. On the contrary, these embodiments are provided to understand the present disclosure more clearly and completely. It should be understood that the drawings and the embodiments of the present disclosure are only for exemplary purposes and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise explicitly stated in the context, it should be understood as "one or more".

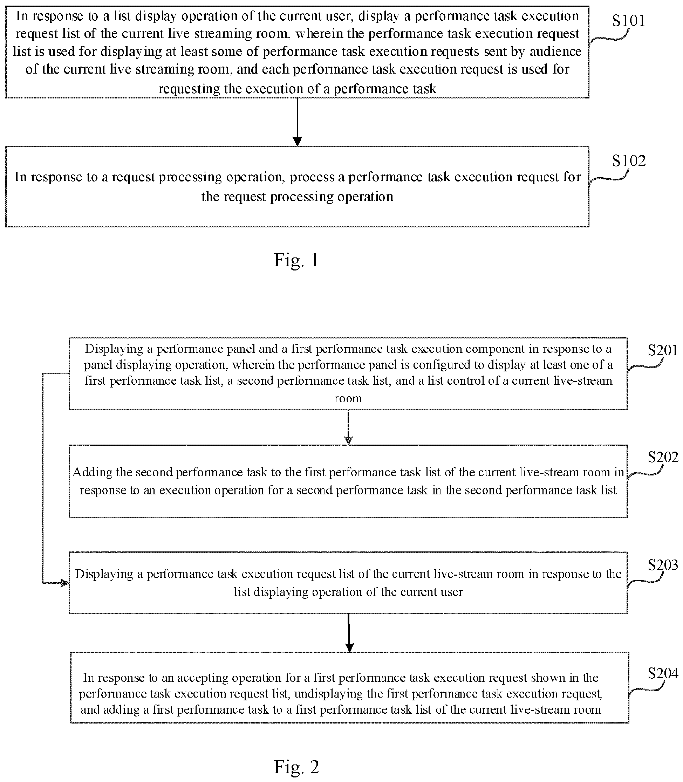

Fig. 1 is a flowchart of an interaction method provided in an embodiment of the present disclosure. The interaction method may be performed by an interaction apparatus that may be implemented by software and/or hardware and may be configured in an electronic device, e.g., configured in a mobile phone or a tablet computer. The interaction method provided by the embodiment of the present disclosure is applicable to a scenario where a performance task is executed in a live-stream room, and particularly applicable to a scenario where a performance task execution request in the live-stream room is processed. As shown in Fig. 1, the interaction method provided by this embodiment may include the following steps.

At S101, in response to a list displaying operation of a current user, a performance task execution request list of a current live-stream room is displayed, and the performance task execution request list is configured to show at least part of performance task execution requests sent by audiences of the current live-stream room; and the performance task execution requests are used for requesting execution of performance tasks.

The list displaying operation may be a triggering operation for instructing the performance task execution request list to be displayed, e.g., triggering a list control displayed in a performance panel of the current live-stream room. The performance task execution request list may be configured to display at least part of performance task execution requests sent by the audiences of the current live-stream room.

The current live-stream room may be a live-stream room to which the performance task execution request list belongs, e.g., a live-stream room that the list displaying operation targets. The current user may be a user performing the list displaying operation. The current user may be a streamer or an audience of the current live-stream room. Optionally, the current user is the streamer of the current live-stream room and the performance task execution request list is configured to show a performance task execution request that has not been processed by the current user; and/or the current user is the audience of the current live-stream room and the performance task execution request list is configured to show a performance task execution request that is sent by the current user and has not been processed by a streamer.

The performance task execution request list may be construed as a request for requesting to execute a certain performance task in the current live-stream room. The performance task may include, for example, a song singing task, a traditional Chinese opera performance task, a cross talk performance task, or other performance tasks, etc., which can be selected by the user sending the performance task execution request. An executor of the performance task may be a user in the current live-stream room, such as a streamer in the current live-stream room, a user sending a performance task execution request, or other users, which can be preset or set by the user sending the performance task execution request. The following description is made by taking as an example that the executor of the performance task is the user sending the performance task execution request. In this case, when the user watches live streaming, the performance task execution request may be sent to request the streamer of the live streaming to execute the performance task in the current live-stream room.

In particular, when the list displaying operation of the current user is received, the performance task execution request list of the current live-stream room can be displayed, and at least part of performance task execution requests sent by the audiences of the current live-stream room are shown in the performance task execution request list. For example, when the current user is the streamer of the current live-stream room, the performance task execution requests that are sent by the audiences of the current live-stream room and that have not been processed by the current user (i.e., the streamer) can be shown in the performance task execution request list. When the current user is an audience of the current live-stream room, the performance task execution request that is sent by the current user to the streamer and has not been processed by the streamer can be shown in the performance task execution request list.

In some implementations, the interaction method of this embodiment further includes: displaying a performance panel in response to a panel displaying operation, wherein the performance panel is configured to display at least one of the first performance task list, a second performance task list, and a list control of the current live-stream room; the second performance task list is configured to show candidate performance tasks of the current live-stream room; and the list control is configured to trigger performing the list displaying operation.

The panel displaying operation may be a triggering operation for instructing the performance panel to be displayed, such as an operation for triggering a performance panel control displayed in a live streaming page of the current live-stream room or other gesture operations. The performance panel may be a panel for showing at least one of the performance task execution request list, the first performance task list, the second performance task list, and the list control of the current live-stream room, which can be displayed in the live streaming page of the current live-stream room.

The first performance task list may be a list of performance tasks to be executed of the current live-stream room, and can be configured to show the performance tasks to be executed of the current live-stream room. Each performance task to be executed may be shown in the form of task identification information in the first performance task list. The performance task to be executed may be regarded as a performance task that has not been executed completely in the current live-stream room, and may include a performance task that is being executed and a performance task that has not been executed. Moreover, a performance task that has been executed completely in the current live-stream room can also be displayed in the first performance task list.

The second performance task list may be a candidate performance task list of the current live-stream room, and can be configured to show candidate performance tasks of the current live-stream room. Each candidate performance task may be shown in the form of task identification information in the second performance task list. The candidate performance task may be regarded as a performance task for selection by the streamer and the audiences to be executed, which can be preset or set by the streamer of the current live-stream room. The list control may be a control for triggering performing the list displaying operation. In other words, the list control may be configured to trigger displaying the performance task execution request list of the current live-stream room. Moreover, under certain conditions, the list control may also be configured to trigger displaying the first performance task list of the current live-stream room.

Exemplarily, when the panel displaying operation is received, e.g., when it is detected that the current user triggers the performance panel control displayed in the live streaming page of the current live-stream room, the performance panel can be displayed, and the first performance task list, the second performance task list and/or the list control of the current live-stream room can be displayed in the performance panel.

For example, a content displayed in the performance panel when the performance panel is displayed in response to the panel displaying operation can be preset. For example, the first performance task list can be displayed in the performance panel, or the second performance task list and the list control, etc. can be displayed in the performance panel.

For another example, the content displayed in the performance panel when the performance panel is displayed in response to the panel displaying operation can be determined according to whether the current user is the streamer of the current live-stream room and whether a performance task execution authority of the current live-stream room is in an enabled state. For example, when the current user is the streamer of the current live-stream room, the performance panel can be displayed in response to the panel displaying operation, and the second performance task list and the list control of the current live-stream room can be displayed in the performance panel. When the current user is an audience of the current live-stream room, if the performance task execution authority of the current live-stream room is in the enabled state, the performance panel can be displayed and the second performance task list and the list control of the current live-stream room can be displayed in the performance panel in response to the panel displaying operation; and if the performance task execution authority of the current live-stream room is in a disabled state, the performance panel can be displayed and the first performance task list can be displayed in the performance panel in response to the panel displaying operation.

In some implementations, the performance panel control can be displayed in the live streaming page of the current live-stream room for the current user to perform the panel displaying operation. For example, when the streamer enables the performance function of the current live-stream room, the performance panel control can be displayed in the live streaming page of the current live-stream room. Moreover, when the performance panel control is displayed, task information of a currently executed performance task in the current live-stream room can be or can be not displayed at an associated position of the performance panel control, which can be specifically determined according to the setting of the streamer of the current live-stream room or the current user. In this case, optionally, the panel displaying operation acts on the performance panel control. The interaction method provided by this embodiment further includes: displaying the performance panel control in the live streaming page of the current live-stream room; or displaying the performance panel control in the live streaming page of the current live-stream room, and displaying current performance task information in the current live-stream room at an associated position of the performance panel control, wherein the current performance task information is task information of a currently executed performance task.

The performance panel control may be a control for triggering performing the panel displaying operation, i.e., a control for triggering displaying the performance panel. The performance panel control may have the same or different displaying styles at a streamer terminal and an audience terminal. That is, when the current user is the streamer of the current live-stream room and when the current user is the audience of the current live stream, the performance panel control may have the same or different displaying styles. When the performance task execution authority of the current live-stream room is in the enabled state and when the performance task execution authority of the current live-stream room is in the disabled state, the performance panel control may have the same or different displaying styles.

Optionally, when the performance task execution authority of the current live-stream room is in the enabled state and when the performance task execution authority of the current live-stream room is in the disabled state, the performance panel control has different display styles such that the current user rapidly determines whether the performance task execution authority of the current live-stream room is in the enabled state.

For example, in case of the current user being the streamer of the current live-stream room, when the performance task execution authority of the current live-stream room is in the disabled state, the performance panel control may be displayed in a first display style, and the first display style does not include information of the number of performance task execution requests received by the current user; and when the performance task execution authority of the current live-stream room is in the enabled state, the performance panel control may be displayed in a second display style, and the second display style includes the information of the number of performance task execution requests received by the current user. In case of the current user being the audience of the current live-stream room, when the performance task execution authority of the current live-stream room is in the disabled state, the performance panel control may be displayed in a third display style; and when the performance task execution authority of the current live-stream room is in the enabled state, the performance panel control may be displayed in a fourth display style.

The first display style, the second display style, the third display style, and the fourth display style may be different display styles. The information of the number of performance task execution requests received by the current user may be, for example, information of the number of performance task execution requests that have not been processed by the current user, information of the number of performance task execution requests newly received by the current user, or information of the total number of performance task execution requests in the performance task execution request list, etc. The information of the number of performance task execution requests newly received by the current user may be information of the number of performance task execution requests received after the current user closes the performance task execution request list for the last time.

The currently executed performance task may be construed as a performance task that is being currently executed in the current live-stream room. The current performance task information may be task information of the currently executed performance task, e.g., information such as a task name and/or a task content of the currently executed performance task. Exemplarily, when the currently executed performance task is a song singing task, the current performance task information may include song information of a song corresponding to the song singing task that is being currently executed. Exemplarily, the song information may include lyrics of the song. The associated information of the target control may be a position associated with the target control, such as a side of the target control.

In this embodiment, when the list displaying operation is received, the performance task execution request list of the current live-stream room can be displayed directly in response to the list displaying operation, without consideration of whether a performance task execution request capable of being processed by the current user is present in the performance task execution request list.

In this embodiment, when the list displaying operation is received, whether the performance task execution request capable of being processed by the current user is present in the performance task execution request list can also be considered, and the performance task execution request list of the current live-stream room can be displayed directly in response to the list displaying operation only when the performance task execution request capable of being processed by the current user is present in the performance task execution request list. In this case, optionally, the displaying the performance task execution request list of the current live-stream room includes: if a current condition meets a preset display condition, displaying the performance task execution request list of the current live-stream room.

Moreover, if the current condition does not meet the preset display condition, other contents than the performance task execution request list can be displayed. For example, the first performance task list is displayed. In this case, optionally, the interaction method provided by this embodiment may further include: if the current condition does not meet the preset display condition, displaying the first performance task list of the current live-stream room.

The preset display condition may be a preset condition for displaying the performance task execution request list in response to the list displaying operation, which may include a performance task execution request that has not been processed by the current user being present and/or the performance task execution authority of the current live-stream room being in the enabled state, etc. When the current user is the streamer of the current live-stream room, the performance task execution request that has not been processed by the current user may include, for example, a performance task execution request that has not been accepted and/or rejected by the current user. When the current user is the audience of the current live-stream room, the performance task execution request that has not been processed by the current user may include, for example, a performance task execution request that is sent by the current user, has not been processed by the streamer of the current live-stream room, and has not been withdrawn by the current user.

Moreover, when the performance task execution request list and/or the first performance task list of the current live-stream room is displayed, a request list identifier corresponding to the performance task execution request list and a task list identifier corresponding to the first performance task list can be further displayed such that the current user views the performance task execution request list/the first performance task list of the current live-stream room by triggering the request list identifier/the task list identifier. The request list identifier can be used for triggering displaying the performance task execution request list of the current live-stream room. The task list identifier can be used for triggering displaying the first performance task list of the current live-stream room.

In some implementations, the current user is the streamer, and after displaying the current performance task information in the current live-stream room at the associated position of the performance panel control, the interaction method further includes: in response to an undisplaying operation for the current performance task information, undisplaying the current performance task information, and controlling audience terminals of audiences in the current live-stream room to undisplay the current performance task information.

In the above implementations, the streamer of the current live-stream room may instruct to undisplay the current performance task information in the current live-stream room by performing the undisplaying operation, i.e., instruct clients (including a streamer terminal and an audience terminal) of users in the current live-stream room to stop displaying the current performance task information in the current live-stream room to reduce occlusion to a live streaming picture of the current live-stream room.

Exemplarily, in case of the current user being the streamer of the current live-stream room, when the streamer terminal receives the undisplaying operation of the streamer for the current performance task information, the current performance task information can be undisplayed and an undisplaying request can be sent to a server to request the server to stop sending the current performance task information of the current live-stream room to the audience terminals of audiences in the current live-stream room such that the audience terminals undisplay the current performance task information.

In some implementations, the current user is an audience, and after displaying the current performance task information in the current live-stream room at the associated position of the performance panel control, the interaction method further includes: in response to the undisplaying operation for the current performance task information, undisplaying the current performance task information.

In the above implementations, the audiences of the current live-stream room can instruct to undisplay the current performance task information at their audience terminals by performing the undisplaying operation. For example, in case of the current user being the audience of the current live-stream room, when the current performance task information of the current live-stream room is in a display state, if the undisplaying operation for the current performance task information is received, the current performance task information of the current live-stream room can be undisplayed at the audience terminal to reduce occlusion to the live streaming picture of the current live-stream room.

The undisplaying operation may be a triggering operation for instructing to stop displaying the current performance task information at the associated position of the performance panel control, such as an operation for triggering an undisplaying control for the current performance task information. The undisplaying control may be displayed in the performance panel or displayed in a task execution component. For example, the undisplaying control can be displayed in the performance panel or a first performance task execution component displayed on the streamer terminal, and/or the undisplaying control can be displayed in the performance panel displayed on the audience terminal, and so on.

Moreover, when the undisplaying operation is received, the undisplaying control can be further switched to a redisplaying control for the current user to perform a redisplaying operation for the current performance task information.

After the current performance task information is undisplayed, the current user can also instruct the present client and/or clients of other users in the current live-stream room to redisplay the current performance task information by performing the redisplaying operation.

For example, when the streamer terminal receives the redisplaying operation of the streamer for the current performance task information, the current performance task information can be redisplayed, and each client that undisplays the current performance task information in response to the undisplaying operation of the streamer is controlled to redisplay the current performance task information.

For another example, when the audience terminal receives the redisplaying operation of the current user for the current performance task information, the current performance task information of the current live-stream room can be directly redisplayed without consideration of whether the streamer has controlled each audience terminal to undisplay the current performance task information. With consideration of whether the streamer has controlled each audience terminal to undisplay the current performance task information, the current performance task information of the current live-stream room can be redisplayed only when the streamer does not control each audience terminal to undisplay the current performance task information; and when the streamer terminal has controlled each audience terminal to undisplay the current performance task information, the current performance task information of the current live-stream room is not redisplayed.

At S102, in response to a request processing operation, the performance task execution request that the request processing operation targets is processed.

The request processing operation may be a triggering operation for processing a performance task execution request, such as an accepting operation, a rejecting operation, or an undo operation for one or more performance task execution requests. The accepting operation may be a triggering operation for accepting a corresponding performance task execution request, i.e., a triggering operation for agreeing to execute or agreeing with a corresponding audience on the execution of the requested performance task. The rejecting operation may be a triggering operation for rejecting a corresponding performance task execution request, i.e., a triggering operation for disagreeing to execute or disagreeing with a corresponding audience on the execution of the requested task. The undo operation may be a triggering operation for undoing the corresponding performance task execution request sent by the current user.

In particular, when a request processing operation for one or more performance task execution requests is received, the one or more performance task execution requests may be processed according to the request processing operation. For example, a task requested by the one or more performance task execution requests to be executed is added to the first performance task list of the current live-stream room and/or the one or more performance task execution requests are removed from the performance task execution request list, and so on.

According to the interaction method provided by this embodiment, the performance task execution request list of the current live-stream room is displayed in response to the list displaying operation of the current user, and the performance task execution request list is configured to show at least part of performance task execution requests sent by the audiences of the current live-stream room; and the performance task execution requests are used for requesting execution of performance tasks; and the performance task execution request that the request processing operation targets is processed in response to the request processing operation. With the above technical solutions of this embodiment, a user can process a performance task execution request received or sent by the same, and whether a performance task requested by the performance task execution request to be executed is executed in the current live-stream room can be determined according to a processing result of the user. Execution manners of performance tasks of the live-stream room can be enriched, and the controllability of the performance tasks performed in the live-stream room can be improved. Different performance task execution requirements of the streamer and the audiences in the live-stream room are met.

Fig. 2 is a flowchart of another interaction method provided by an embodiment of the present disclosure. The solutions in this embodiment may be combined with one or more optional solutions in the above embodiment, and can be applied to a streamer terminal. Optionally, the current user is a streamer; the at least part of performance task execution requests include a performance task execution request that has not been processed by the streamer; and the in response to a request processing operation, processing the performance task execution request that the request processing operation targets includes: in response to an accepting operation for a first performance task execution request shown in the performance task execution request list, undisplaying the first performance task execution request, and adding a first performance task to a first performance task list of the current live-stream room, wherein the first performance task is a performance task requested by the first performance task execution request to be executed; and the first performance task list is configured to show performance tasks to be executed of the current live-stream room.

Optionally, the current user is a streamer, after the displaying a performance panel, the interaction method provided in this embodiment further includes: in response to an execution operation for a second performance task in the second performance task list, adding the second performance task to the first performance task list of the current live-stream room.

Optionally, the current user is a streamer, the interaction method provided in this embodiment further includes: when the performance panel is in a display state, displaying a first performance task execution component, wherein the first performance task execution component is configured for the current user to control each performance task to be executed of the current live-stream room.

Correspondingly, as shown in Fig. 2, the interaction method provided in this embodiment may include the following steps.

At S201, in response to a panel displaying operation, a performance panel and a first performance task execution component are displayed, and S202 or S203 is performed. The performance panel is configured to display at least one of a first performance task list, a second performance task list, and a list control of a current live-stream room; the second performance task list is configured to show candidate performance tasks of the current live-stream room; the list control is configured to trigger performing the list displaying operation; the first performance task execution component is configured for a current user to control each performance task to be executed of the current live-stream room; and the current user is a streamer.

The first performance task execution component may be a component configured to control each performance task to be executed of the current live-stream room, which can be displayed synchronously with the performance panel when the performance panel is displayed on the streamer terminal such that the streamer controls each performance task to be executed of the current live-stream room. The performance task to be executed may include a performance task added by the streamer or a performance task requested by an audience to be executed.

In particular, when the panel displaying operation of the streamer is received, the performance panel and the first performance task execution component can be displayed in response to the panel displaying operation. For example, the performance panel is displayed, and the first performance task execution component is displayed at an associated position of the performance panel such that the streamer controls each performance task to be executed in the current live-stream room.

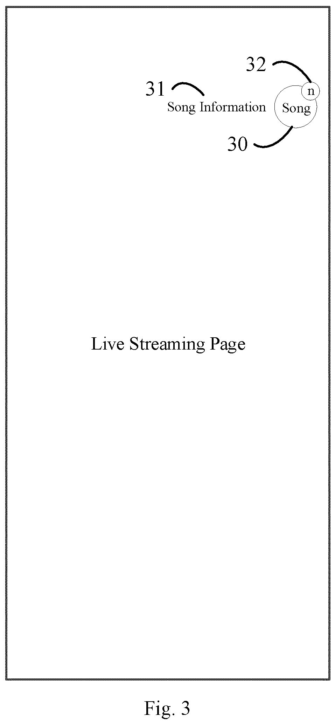

Taking a song singing task as an example, when the streamer enables a performance function in the live-stream room, the streamer terminal can display a song requesting control 30 (i.e., a performance panel control) and song information 31 of a song sung currently (i.e., current performance task information) in a live streaming page of the live-stream room, and the steamer terminal can further display information 32 of the number of song requesting requests (i.e., performance task execution requests) newly received by the streamer in the song requesting control 30 when an audience song requesting authority (i.e., a performance task execution authority) of the live-stream room is in an enabled state, as shown in Fig. 3, to prompt the streamer to process the newly received song requesting requests.

When the streamer wants to view a performance task execution request list, a play list (i.e., the first performance task list) or a song list (i.e., the second performance task list) of the live-stream room, the song requesting control 30 can be triggered.

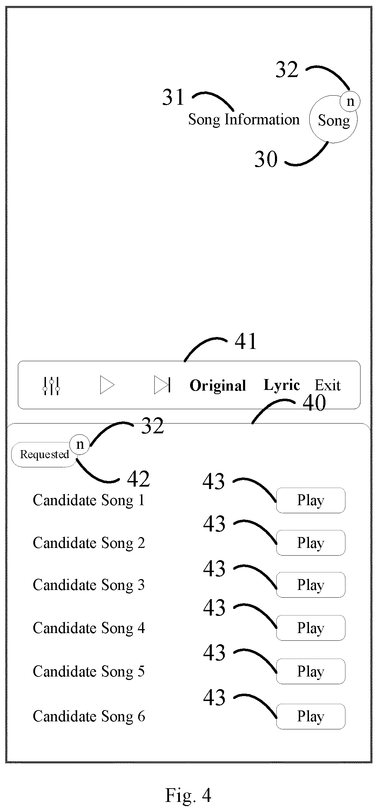

Correspondingly, when the streamer terminal detects that the streamer triggers the song requesting control 30, it can be determined that the panel displaying operation is received, and a song requesting panel 40 (i.e., the performance panel) and a karaoke component 41 (i.e., the first performance task execution component) can be displayed in response to the panel displaying operation. A song list and a requested control 42 (i.e., the list control) are displayed in the song requesting panel 40, and information 32 of the number of song requesting requests newly received by the streamer can be further displayed in the requested control 42, as shown in Fig. 4, to prompt the streamer to process the newly received song requesting requests.

With continued reference to Fig. 4, a parameter adjustment control, a pausing/continuing control, a task switching control, a task original sound control, an undisplaying/redisplaying control and/or an exit control may be displayed in the first performance task execution component. Thus, the streamer can enter a parameter adjustment panel by triggering the parameter adjustment control and adjust a task parameter of a performance task to be executed in the live-stream room in the parameter adjustment panel, e.g., adjust the task parameter of the currently executed performance task and/or one or more tasks that have not been executed. The streamer can pause/continue the execution of the currently executed performance task in the live-stream room by triggering the pausing/continuing control, e.g., pause playing of an accompaniment of a currently sung song or continue to play the currently sung song. The streamer can switch to execute next performance task to be executed in the first performance task list by triggering the task switching control. The streamer can turn on/off original sound of the currently executed performance task in the live-stream room by triggering the task original sound control, e.g., turn on/off the original sound of a currently sung song in the live-stream room. The streamer can perform the undisplaying operation/redisplaying operation for the current performance task information by triggering the undisplaying/redisplaying control. Additionally/alternatively, the streamer can instruct the streamer terminal to stop displaying the first performance task execution component by triggering the exit control, etc. Taking the song singing task as an example, the task parameter may include parameters such as a voice volume, an accompaniment volume, and a rising-falling tone.

At S202, in response to an execution operation for a second performance task in the second performance task list, the second performance task is added to the first performance task list of the current live-stream room.

The execution operation may be a triggering operation for instructing to execute a certain candidate performance task in the second performance task list, e.g., a triggering operation for triggering an execution control corresponding to the certain candidate performance task. The second performance task may be a candidate performance task that the execution operation instructs to execute.

In this embodiment, when the execution operation of the streamer is received, a candidate performance task that the streamer wants to execute can be added to the first performance task list with no need to generate a performance task execution request corresponding to the candidate performance task or with no need to add the performance task execution request to the performance task execution request list for the streamer to process, thereby reducing the number of performance task execution requests that the streamer needs to processed.

In particular, when the execution operation of the streamer for a certain candidate performance task in the second performance task list is received, e.g., when it is detected that the streamer triggers the execution control corresponding to the certain candidate performance task in the second performance task list, the candidate performance task can be added to the first performance task list of the current live-stream room.

Taking the song singing task as an example, as shown in Fig. 4, a plurality of candidate songs (i.e., the candidate performance tasks) for the streamer to select and song requesting controls 43 (i.e., the execution controls) corresponding to the candidate songs can be displayed in the song list. Thus, when the streamer wants to sing a certain candidate song in the live-stream room, the song requesting control 43 corresponding to the candidate song can be triggered. Correspondingly, when the streamer terminal detects that the streamer triggers a certain song requesting control 43 in a song list, the candidate song corresponding to the song requesting control 43 can be added to a play list.

It can be appreciated that in response to receiving the execution operation of the streamer for the second performance task in the second performance task list, the streamer terminal can also generate a performance task execution request corresponding to the second performance task and add the performance task execution request to the performance task execution request list; and the streamer terminal adds the second performance task to the first performance task list in response to receiving an accepting operation for the performance task execution request, which can be specifically set as required.

At S203, in response to the list displaying operation of the current user, a performance task execution request list of the current live-stream room is displayed, wherein the performance task execution request list is configured to show at least part of performance task execution requests sent by audiences of the current live-stream room, and the at least part of performance task execution requests include a performance task execution request that has not been processed by the current user; and the performance task execution requests are used for requesting execution of performance tasks.

In this embodiment, when the streamer terminal receives the list displaying operation of the streamer, e.g., when it is detected that the streamer triggers the list control displayed in the performance panel, the performance task execution request list of the current live-stream room can be displayed, and the performance task execution request that has not been processed by the streamer can be displayed in the performance task execution request list.

Moreover, a target control may be further displayed in the performance task execution request list for the streamer to enable/disable the performance task execution authority of the current live-stream room. In this case, optionally, the current user is the streamer; the target control is displayed in the performance task execution request list and configured to trigger enabling or disabling of the performance task execution authority of the current live-stream room; when the performance task execution authority is in an enabled state, the current live-stream room supports the audiences to send the performance task execution requests to the streamer; and when the performance task execution authority is in a disabled state, the current live-stream room does not support the audiences to send the performance task execution requests to the streamer. The performance task execution authority may be construed as an authority for an audience to perform a performance task in the current live-stream room.

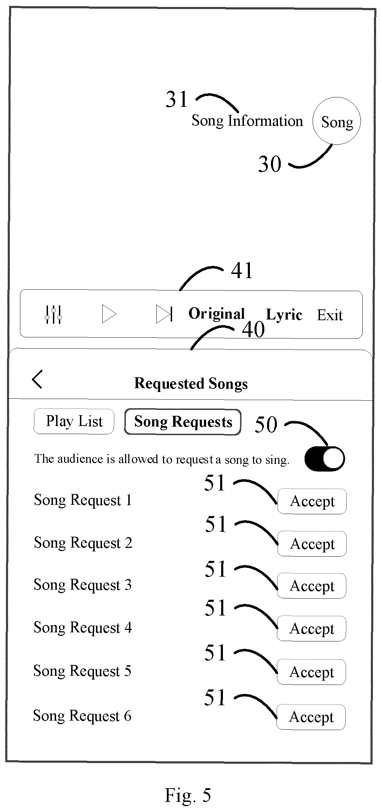

Taking the song singing task as an example, as shown in Fig. 4, the requested control 42 can be displayed in the song requesting panel. Thus, when it is detected that the streamer triggers the requested control 42, the performance task execution request list of the live-stream room can be displayed in the song requesting panel 40; song requesting requests that have not been processed by the streamer can be shown in the performance task execution request list; and a song requesting authority control 50 (i.e., the target control) can be further displayed in the performance task execution request list, as shown in Fig. 5 (in which the audience song requesting authority is in the enabled state for example).

In some implementations, after the displaying the performance task execution request list of the current live-stream room, the interaction method further includes at least one of: in response to an enabling operation for the performance task execution authority, enabling the performance task execution authority of the current live-stream room, and showing performance task execution requests to be processed of the current live-stream room in the performance task execution request list; and in response to a disabling operation for the performance task execution authority, disabling the performance task execution authority of the current live-stream room, and clearing the performance task execution request list.

The enabling operation may be a triggering operation for instructing to enable the performance task execution authority of the current live-stream room, e.g., an operation for triggering the target control when the performance task execution authority of the current live-stream room is in the disabled state. The disabling operation may be a triggering operation for instructing to disable the performance task execution authority of the current live-stream room, e.g., an operation for triggering the target control when the performance task execution authority of the current live-stream room is in the enabled state.

In particular, when the enabling operation for the performance task execution authority is received, the performance task execution authority of the current live-stream room can be enabled. After the performance task execution authority of the current live-stream room is enabled, the audiences in the current live-stream room can send performance task execution requests to the streamer. Thus, the streamer terminal can show the performance task execution requests received by the streamer in the performance task execution request list for processing by the streamer. When the disabling operation for the performance task execution authority is received, the performance task execution authority of the current live-stream room can be disabled, and the performance task execution request list of the streamer terminal can be further cleared.

Taking the song singing task as an example, as shown in Fig. 5, the song requesting authority control 50 can be displayed in the performance task execution request list. Thus, in case of the authority song singing authority of the live-stream room being in the disabled state, the streamer terminal may switch the audience song requesting authority of the live-stream room from the disabled state to the enabled state in response to detecting that the streamer triggers the song requesting authority control 50, and song requesting requests sent by audiences can be shown in the performance task execution request list. In case of the authority song singing authority of the live-stream room being in the enabled state, in response to detecting that the streamer triggers the song requesting authority control 50, the streamer terminal may switch the audience song requesting authority of the live-stream room from the enabled state to the disabled state, and remove the song requesting requests shown in the performance task execution request list from the performance task execution request list.

In the above implementations, the streamer can enable and disable the performance task execution authority of the current live-stream room as required by simply triggering the target control in a live streaming process. Thus, whether sending a performance task execution request by an audience is supported is controlled, and an operation required for controlling whether sending a performance task execution request by an audience is supported can be simplified.

It can be appreciated that the disabling of the performance task execution authority of the current live-stream room will have no influence on the execution of each performance task to be executed that has been added to the first performance task list or the addition of a candidate performance task to the first performance task list by the streamer.

Moreover, when the performance task execution authority of the current live-stream room is disabled, the audience terminal of each audience in the current live-stream room can clear the performance task execution request list of the present terminal, or the performance task execution requests in the performance task execution request list of the present terminal can be retained such that the audience resend the performance task execution request in the performance task execution request list after the streamer re-enables the performance task execution authority of the current live-stream room. When the performance task execution authority of the current live-stream room is enabled, if a connection function of the current live-stream room is in the disabled state, the connection function of the current live-stream room can be enabled such that an audience of the current live-stream room connects to the streamer to execute a performance task. When the performance task execution authority of the current live-stream room is disabled, e.g., when each performance task to be executed requested by each audience in the first performance task list has been executed completely, the connection function of the current live-stream room can be or cannot be disabled.

At S204, in response to an accepting operation for a first performance task execution request shown in the performance task execution request list, the first performance task execution request is undisplayed, and a first performance task is added to a first performance task list of the current live-stream room, wherein the first performance task is a performance task requested by the first performance task execution request to be executed; and the first performance task list is configured to show performance tasks to be executed of the current live-stream room.

The accepting operation may be an operation for accepting a performance task execution request sent by an audience, e.g., an operation for agreeing with a sender of a performance task execution request on the execution of the requested performance task. The accepting operation may be, for example, an operation for triggering an accepting control corresponding to a performance task execution request. The first performance task execution request may be a performance task execution request for the accepting operation. The first performance task may be a task requested by the first performance task execution request to be executed.

In particular, when the accepting operation of the streamer for a certain performance task execution request shown in the performance task execution request list is received, the performance task execution request can be removed from the performance task execution request list, and the performance task requested by the performance task execution request to be executed can be added to the first performance task list of the current live-stream room.

Taking the song singing task as an example, as shown in Fig. 5, the accepting controls 51 corresponding to the song requesting requests are displayed in the performance task execution request list. Thus, when it is detected that the streamer triggers the accepting control 51 corresponding to a certain song requesting request, the song requesting request can be removed from the performance task execution request list, and the song requested by the song requesting request to be sung can be added to the play list of the live-stream room.

Here, each performance task execution request may be shown in the performance task execution request list in the form of request information, and the request information may include sender information of the performance task execution request, task identification information requested by the performance task execution request and/or sending time information of the performance task execution request, etc.

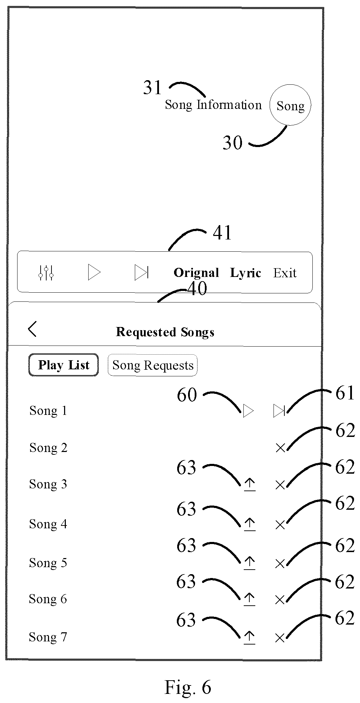

The task identification information of each performance task to be executed as well as requester information of each performance task to be executed may be displayed in the first performance task list. As shown in Fig. 6 (in which the song singing task is taken as an example), a pausing/continuing control 60 and/or a task switching control 61 of the currently executed performance task (e.g., song 1 shown in Fig. 6) may also be displayed in the first performance task list such that the streamer controls the currently executed performance task. Moreover, a task deleting control 62 and/or a reordering control 63 may also be displayed in the first performance task list. Thus, the streamer can delete a corresponding performance task to be executed by triggering the task deleting control 62, or adjust an order of a corresponding performance task to be executed in the first performance task list by triggering the reordering control 63, thereby adjusting the execution order of each performance task to be executed in the first performance task list.

Moreover, when a performance task to be executed requested by an audience is present in the first performance task list, the streamer terminal can also periodically determine whether the number of audiences connecting currently in the current live-stream room is less than or equal to a preset number. If yes, sequential connection to the audience corresponding to each performance task to be executed can be carried out according to the order of each performance task to be executed in the first performance task list such that the audience can execute the requested task until the number of audiences connecting reaches the preset number. If no, the current connection is maintained. The preset number may be set as required. For example, the preset number may be set to 3 or 5, etc.

According to the interaction method provided by this embodiment, the streamer, after enabling the performance task execution authority of the live-stream room, can receive the performance task execution requests sent by the audiences in the live-stream room and process the received performance task execution requests, and can add the performance tasks requested by the audiences to be executed to the first performance task list when the processing is passed, which can enrich the execution manners of performance tasks of the live-stream room, and the improve controllability of the performance tasks performed in the live-stream room.

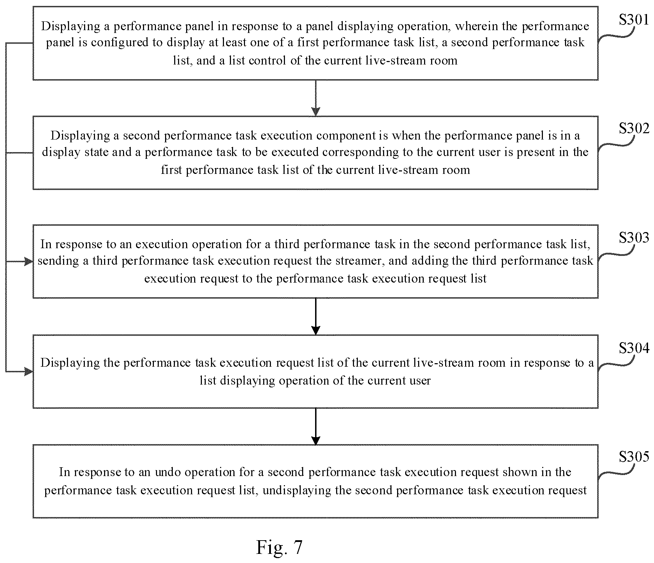

Fig. 7 is a flowchart of another interaction method provided by an embodiment of the present disclosure. The solutions in this embodiment may be combined with one or more optional solutions in the above embodiments, and can be applied to an audience terminal. Optionally, the current user is an audience; the at least part of performance task execution requests include a performance task execution request that is sent by the current user and has not been processed by a streamer; and the in response to a request processing operation, processing the performance task execution request that the request processing operation targets includes: in response to an undo operation for a second performance task execution request shown in the performance task execution request list, undisplaying the second performance task execution request.

Optionally, the current user is an audience; and after the displaying the performance panel, the interaction method further includes: in response to an execution operation for a third performance task in the second performance task list, sending a third performance task execution request to a streamer, and adding the third performance task execution request to the performance task execution request list, wherein the third performance task execution request is used for requesting to execute the third performance task.

Optionally, the current user is an audience; and the interaction method further includes: when the performance panel is in a display state and a performance task to be executed corresponding to the current user is present in the first performance task list of the current live-stream room, displaying a second performance task execution component, wherein the second performance task execution component is configured to control the performance task to be executed of the current user.

Correspondingly, as shown in Fig. 7, the interaction method provided in this embodiment may include the following steps.

At S301, in response to a panel displaying operation, a performance panel is displayed, and S302, S303 or S304 is performed, wherein the performance panel is configured to display at least one of a first performance task list, a second performance task list, and a list control of the current live-stream room; the second performance task list is configured to show candidate performance tasks of the current live-stream room; and the list control is configured to trigger performing the list displaying operation.

In this embodiment, in case of a current user being an audience of the current live-stream room, when the panel displaying operation of the current user is received, the performance panel can be displayed. When the performance task execution authority of the current live-stream room is in the disabled state, the first performance task list is displayed in the performance panel; and when the performance task execution authority of the current live-stream room is in the enabled state, the second performance task list is displayed in the performance panel.

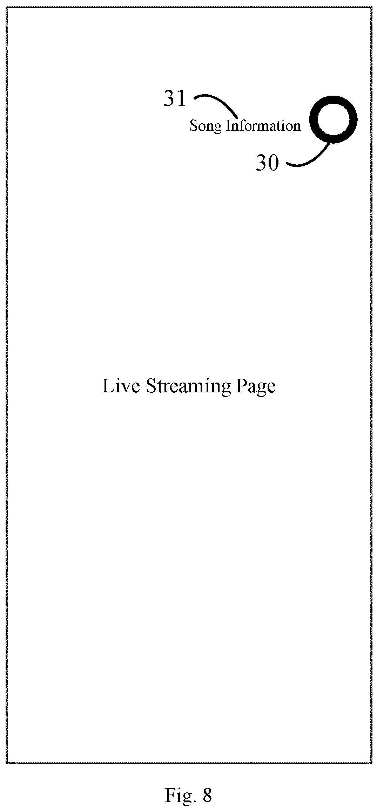

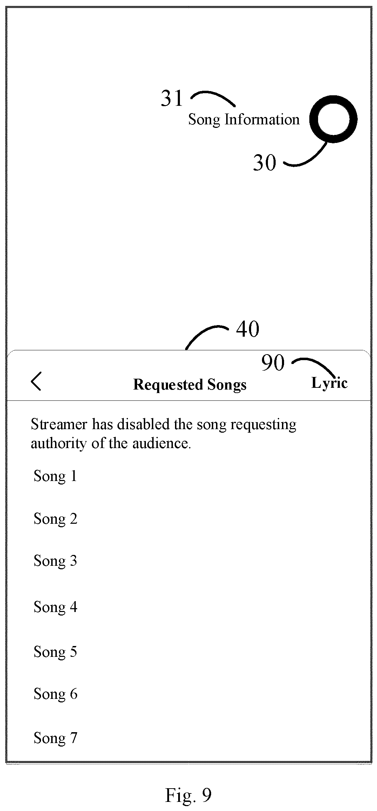

Taking the song singing task as an example, when the audience song requesting authority of the current live-stream room is in the disabled state, a song requesting control 30 can be displayed in a third display style in a live-stream room page of the current live-stream room, as shown in Fig. 8, and song information 31 of the currently sung song can be displayed or cannot be displayed. When it is detected that the current user triggers the song requesting control 30, a song requesting panel 40 is displayed, and a play list of the current live-stream room is displayed in the song requesting panel 40, as shown in Fig. 9.

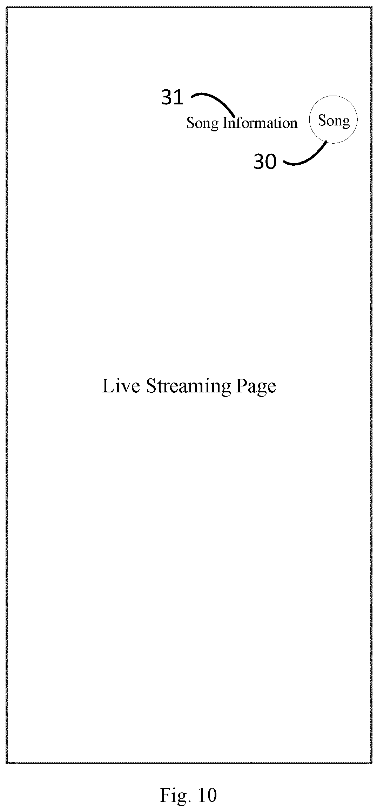

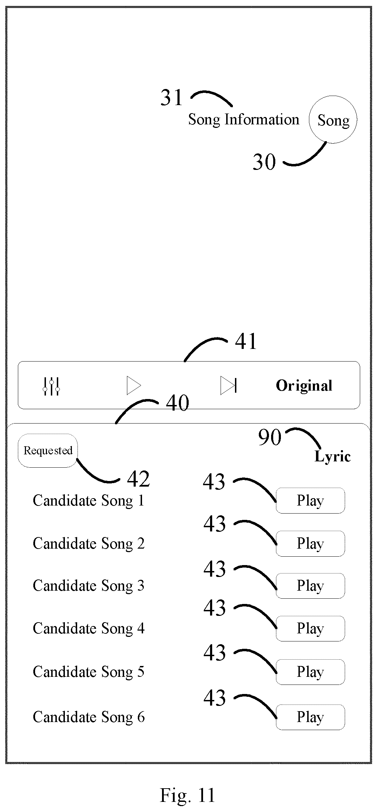

When the audience song requesting authority of the current live-stream room is in the enabled state, the song requesting control 30 can be displayed in a fourth display style in the live streaming page of the current live-stream room, as shown in Fig. 10, and the song information 31 of the currently sung song can be displayed or cannot be displayed. When it is detected that the current user triggers the song requesting control 30, the song requesting panel 40 is displayed, and the play list of the current live-stream room is displayed in the song requesting panel 40, as shown in Fig. 11, such that the current user requests a song.

Moreover, as shown in Fig. 9 and Fig. 11, an undisplaying/redisplaying control 90 for current performance task information can be further displayed in the performance panel. Thus, the current user can perform an undisplaying operation/redisplaying operation for the current performance task information by triggering the undisplaying/redisplaying control 90.

At S302, when the performance panel is in a display state and a performance task to be executed corresponding to the current user is present in the first performance task list of the current live-stream room, a second performance task execution component is displayed, and S303 or S304 is executed, wherein the second performance task execution component is configured to control the performance task to be executed of the current user.

In this embodiment, when the performance panel is in the display state and the performance task to be executed requested by the current user is present in the first performance task list, the second performance task execution component can be displayed at the associated position of the performance panel such that the current user controls the performance task requested to be executed.

For example, when the panel displaying operation is received, if the performance task to be executed requested by the current user is present in the first performance task list, the performance panel and the second performance task execution component (e.g., a karaoke component 41 shown in Fig. 11) can be displayed in response to the panel displaying operation. If the performance task to be executed requested by the current user is not present in the first performance task list, the performance panel can be displayed in response to the panel displaying operation.

The second performance task execution component can be a component for the current user to control the performance task requested to be executed. As shown in Fig. 11 (in which the song singing task is taken as an example), a parameter adjustment control, a pausing/continuing control, a task switching control and/or a task original sound control can be displayed in the second performance task execution component. Thus, the current user can enter a parameter adjustment panel by triggering the parameter adjustment control and adjust a task parameter of a performance task to be executed requested in the parameter adjustment panel. The current user, when performing the performance task to be executed requested, can pause/continue the execution of the performance task to be executed by triggering the pausing/continuing control, e.g., pause playing of an accompaniment of a currently sung song or continue to play the currently sung song. The current user can switch to execute next performance task to be executed in the first performance task list by triggering the task switching control to finish the execution of the performance task that is being currently performed. The current user, when executing the performance task requested to be executed, can turn on/off the original sound of the task by triggering the task original sound control, e.g., turn on/off the original sound of the currently sung song in the live-stream room. Taking the song singing task as an example, the task parameter may include parameters such as a voice volume, an accompaniment volume, and a rising-falling tone.

Moreover, when the performance panel is in the display state, if the streamer accepts a certain performance task execution request sent by the current user, i.e., if a certain performance task to be executed requested by the current user is added to the first performance task list, the second performance task execution component can be displayed.

At S303, in response to an execution operation for a third performance task in the second performance task list, a third performance task execution request is sent to the streamer, and the third performance task execution request is added to the performance task execution request list, wherein the third performance task execution request is used for requesting to execute the third performance task.

The execution operation may be a triggering operation for instructing to execute a certain candidate performance task in the second performance task list, e.g., a triggering operation for triggering an execution control corresponding to the certain candidate performance task. The third performance task may be a candidate performance task that the audience instructs to execute by the execution operation. The third performance task execution request can be used for requesting the streamer to execute the third performance task.

In particular, when the execution operation of the current user for a certain candidate performance task in the second performance task list is received, e.g., when it is detected that the current user triggers an execution control corresponding to a certain candidate performance task in the second performance task list, a performance task execution request for the candidate performance task can be generated, and the performance task execution request can be sent to the streamer, and the performance task execution request can be added to the performance task execution request list of the current user.

Taking the song singing task as an example, as shown in Fig. 11, a plurality of candidate songs for the current user to select and song requesting controls 43 corresponding to the candidate songs can be displayed in the song list. Thus, when the current user wants to sing a certain candidate song in the live-stream room, the song requesting control 43 corresponding to the candidate song can be triggered. Correspondingly, when the audience terminal detects that the current user triggers the song requesting control 43 corresponding to a certain candidate song in the song list, a song requesting request corresponding to the candidate song can be generated, and the song requesting request can be sent to the streamer terminal through a server, and the song requesting request can be added to the performance task execution request list.

It can be appreciated that when the streamer accepts a certain performance task execution request sent by the current user, the performance task execution request can be removed from the performance task execution request list displayed on the audience terminal of the current user.

At S304, in response to a list displaying operation of the current user, the performance task execution request list of the current live-stream room is displayed, wherein the performance task execution request list is configured to show at least part of performance task execution requests sent by audiences of the current live-stream room, and the at least part of performance task execution requests include a performance task execution request that is sent by the current user and has not been processed by the streamer; the performance task execution requests are used for requesting execution of performance tasks; and the current user is the audience.

In this embodiment, when the audience terminal receives the list displaying operation of the current user, e.g., when it is detected that the current user triggers the list control displayed in the performance panel, the performance task execution request list of the current user can be displayed, and the performance task execution request that is sent by the current user and has not been processed by the streamer can be displayed in the performance task execution request list.

In this embodiment, when the list displaying operation is received, the performance task execution request list of the current user can be displayed. When the list displaying operation is received, whether the performance task execution request that is sent by the current user and has not been processed by the streamer is present can be determined. If yes, the performance task execution request list of the current user is displayed such that the current user processes the performance task execution request sent by the same. If no, the first performance task list of the current live-stream room is displayed, and the following description is made by taking this case as an example.

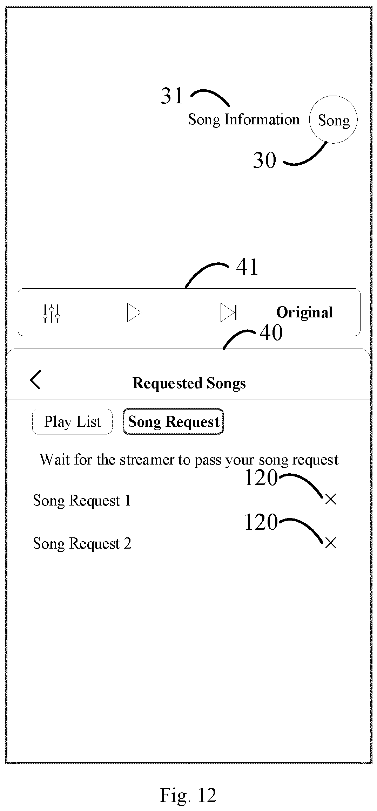

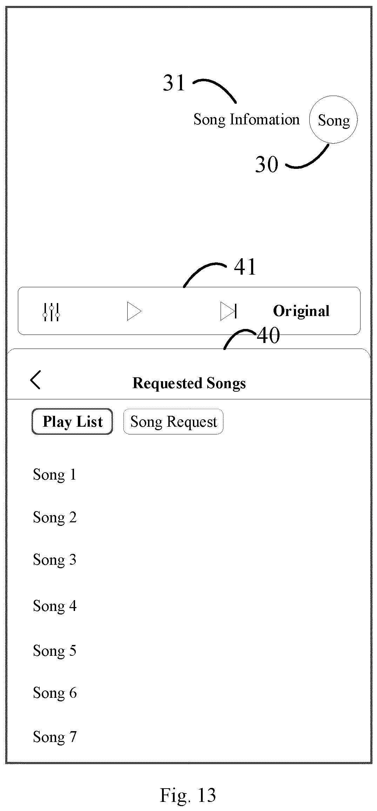

Taking the song singing task as an example, as shown in Fig. 11, a requested control 42 can be displayed in the song requesting panel. Thus, when it is detected that the current user triggers the requested control 42, if a song requesting request that is sent by the current user and has not been processed by the streamer is present, the performance task execution request list is displayed in the song requesting panel 40, and the song requesting request that is sent by the current user and has not been processed by the streamer is shown in the performance task execution request list, as shown in Fig. 12. If the song requesting request that is sent by the current user and has not been processed by the streamer is not present, the play list of the live-stream room is displayed in the song requesting panel 40, as shown in Fig. 13.

At S305, in response to an undo operation for a second performance task execution request shown in the performance task execution request list, the second performance task execution request is undisplayed.

The undo operation may be an operation for undoing one or more performance task execution requests sent by the current user, e.g., an operation for triggering an undo control corresponding to the performance task execution request. The second performance task execution request may be a performance task execution request that the undo operation targets.

In particular, when the undo operation of the current user for a certain performance task execution request shown in the performance task execution request list is received, the performance task execution request can be removed from the performance task execution request list, and the streamer terminal can be further controlled to stop showing the performance task execution request in the performance task execution request list, i.e., the streamer does not need to process the performance task execution request.

Taking the song singing task as an example, as shown in Fig. 12, undo controls 120 corresponding to the song requesting requests are displayed in the performance task execution request list. Thus, when it is detected that the streamer triggers the undo control 120 corresponding to a certain song requesting request, the performance task execution request can be undone, and the song requesting request can be removed from the performance task execution request list.

According to the interaction method provided by this embodiment, the second performance task execution component is displayed on the audience terminal only when the performance task to be executed requested by the current user is present and the performance panel is in the display state; and the current user can process the performance task execution request sent by the same through the performance task execution request list. The occlusion of the second performance task execution component to the live streaming picture can be reduced, and the need of the audience to undo the performance task execution request sent by the same can be met.

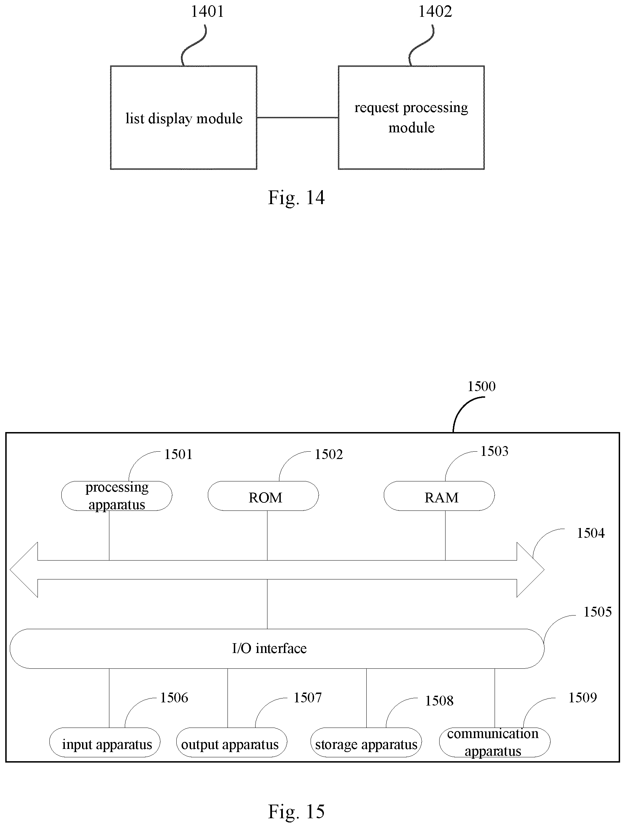

Fig. 14 is a structural block diagram of an interaction apparatus provided by an embodiment of the present disclosure. The interaction apparatus may be implemented by software and/or hardware and may be configured in an electronic device, e.g., configured in a mobile phone or a tablet computer, and can process performance task execution requests in a live-stream room by performing the interaction method. As shown in Fig. 14, the interaction apparatus provided by this embodiment may include a list display module 1401 and a request processing module 1402.

The list display module 1401 is configured to, in response to a list displaying operation of a current user, display a performance task execution request list of a current live-stream room, wherein the performance task execution request list is configured to show at least part of performance task execution requests sent by audiences of the current live-stream room; and the performance task execution requests are used for requesting execution of performance tasks.

The request processing module 1402 is configured to, in response to a request processing operation, process the performance task execution request that the request processing operation targets.

The interaction apparatus provided by this embodiment, by using the list display module 1401, in response to the list displaying operation of the current user, displays the performance task execution request list of the current live-stream room, wherein the performance task execution request list is configured to show at least part of performance task execution requests sent by audiences of the current live-stream room; and the performance task execution requests are used for requesting execution of performance tasks; and the interaction apparatus, by using the request processing module 1402, processes the performance task execution request that the request processing operation targets. With the above technical solutions of this embodiment, a user can process a performance task execution request received or sent by the same, and whether a performance task requested by the performance task execution request to be executed is executed in the current live-stream room according to a processing result of the user. Execution manners of performance tasks of the live-stream room can be enriched, and the controllability of the performance tasks performed in the live-stream room can be improved. Different performance task execution requirements of the streamer and the audiences in the live-stream room are met.

In the above solutions, the current user may be a streamer; the at least part of performance task execution requests may include a performance task execution request that has not been processed by the current user; and the request processing module 1402 may be configured to, in response to an accepting operation for a first performance task execution request shown in the performance task execution request list, undisplay the first performance task execution request, and add a first performance task to a first performance task list of the current live-stream room, wherein the first performance task is a performance task requested by the first performance task execution request to be executed; and the first performance task list is configured to show performance tasks to be executed of the current live-stream room.

In the above solutions, the current user may be an audience; the at least part of performance task execution requests may include a performance task execution request that is sent by the current user and has not been processed by the streamer; and the request processing module 1402 may be configured to, in response to an undo operation for a second performance task execution request shown in the performance task execution request list, undisplay the second performance task execution request.

In the above solutions, the current user may be a streamer; a target control may be displayed in the performance task execution request list and can be configured to trigger enabling or disabling of the performance task execution authority of the current live-stream room; when the performance task execution authority is in an enabled state, the current live-stream room supports the audiences to send the performance task execution requests to the streamer; and when the performance task execution authority is in a disabled state, the current live-stream room does not support the audiences to send the performance task execution requests to the streamer.

Further, the interaction apparatus provided by this embodiment may further include: an authority enabling module configured to, after the displaying the performance task execution request list of the current live-stream room, in response to an enabling operation for the performance task execution authority, enable the performance task execution authority of the current live-stream room, and show performance task execution requests to be processed of the current live-stream room in the performance task execution request list; and an authority disabling module configured to, after the displaying the performance task execution request list of the current live-stream room, in response to a disabling operation for the performance task execution authority, disable the performance task execution authority of the current live-stream room, and clear the performance task execution request list.

Further, the interaction apparatus provided by this embodiment may further include: a panel display module configured to, in response to a panel displaying operation, display a performance panel, wherein the performance panel is configured to display at least one of the first performance task list, a second performance task list, and a list control of the current live-stream room; the second performance task list is configured to show candidate performance tasks of the current live-stream room; and the list control is configured to trigger performing the list displaying operation.

In the above solutions, the current user may be a streamer, and the interaction apparatus provided by this embodiment may further include: a task adding module configured to, after the displaying the performance panel, in response to an execution operation for a second performance task in the second performance task list, add the second performance task to the first performance task list of the current live-stream room.

In the above solutions, the current user may be an audience, and the interaction apparatus provided by this embodiment may further include: a request adding module configured to, after the displaying the performance panel, in response to an execution operation for a third performance task in the second performance task list, send a third performance task execution request to a streamer, and add the third performance task execution request to the performance task execution request list, wherein the third performance task execution request is used for requesting to execute the third performance task.

In the above solutions, the current user may be a streamer, and the interaction apparatus provided by this embodiment may further include: a first component display module configured to, when the performance panel is in a display state, display a first performance task execution component, wherein the first performance task execution component is configured for the current user to control performance tasks to be executed of the current live-stream room.

In the above solutions, the current user may be an audience, and the interaction apparatus provided by this embodiment may further include: a second component display module configured to, when the performance panel is in a display state and a performance task to be executed corresponding to the current user is present in the first performance task list of the current live-stream room, display a second performance task execution component, wherein the second performance task execution component is configured to control the performance task to be executed of the current user.

In the above solutions, the panel displaying operation may act on the performance panel control, and the interaction apparatus provided by this embodiment may further include: a control display module configured to: display the performance panel control in the live streaming page of the current live-stream room; or display the performance panel control in the live streaming page of the current live-stream room, and display current performance task information in the current live-stream room at an associated position of the performance panel control, wherein the current performance task information is task information of a currently executed performance task.

In the above solutions, the current user may be a streamer, and the interaction apparatus provided by this embodiment may further include: a first undisplaying module configured to, after displaying the current performance task information in the current live-stream room at the associated position of the performance panel control, in response to an undisplaying operation for the current performance task information, undisplay the current performance task information, and control audience terminals of audiences in the current live-stream room to undisplay the current performance task information.

In the above solutions, the current user may be an audience, and the interaction apparatus provided by this embodiment may further include: a second undisplaying module configured to, after displaying the current performance task information in the current live-stream room at the associated position of the performance panel control, in response to the undisplaying operation for the current performance task information, undisplay the current performance task information.

In the above solutions, when the performance task execution authority of the current live-stream room is in the enabled state and when the performance task execution authority of the current live-stream room is in the disabled state, the performance panel control may have different displaying styles.

The interaction apparatus provided in the embodiment of the present disclosure may perform the interaction method provided in any embodiment of the present disclosure, and has corresponding functional modules for performing the interaction method and beneficial effects. For technical details not described in detail in the present embodiment, a reference may be made to the interaction method provided in any embodiment of the present disclosure.

Fig. 15 is specifically referred below, and it shows the structure schematic diagram suitable for achieving the electronic device 1500 (e.g. a terminal device) in the embodiment of the present disclosure. The electronic device 1500 in the embodiment of the present disclosure may include but not be limited to a mobile terminal such as a mobile phone, a notebook computer, a digital broadcasting receiver, a personal digital assistant (PDA), a PAD (tablet computer), a portable multimedia player (PMP), a vehicle terminal (such as a vehicle navigation terminal), and a fixed terminal such as a digital television (TV) and a desktop computer. The electronic device shown in Fig. 15 is only an example and should not impose any limitations on the functions and use scopes of the embodiments of the present disclosure.

As shown in Fig. 15, the electronic device 1500 may include a processing apparatus (such as a central processing unit, and a graphics processor) 1501, it may execute various appropriate actions and processes according to a program stored in a read-only memory (ROM) 1502 or a program loaded from a storage apparatus 1508 to a random access memory (RAM) 1503. In RAM 1503, various programs and data required for operations of the electronic device 1500 are also stored. The processing apparatus 1501, ROM 1502, and RAM 1503 are connected to each other by a bus 1504. An input/output (I/O) interface 1505 is also connected to the bus 1504.

Typically, the following apparatuses may be connected to the I/O interface 1505: an input apparatus 1506 such as a touch screen, a touchpad, a keyboard, a mouse, a camera, a microphone, an accelerometer, and a gyroscope; an output apparatus 1507 such as a liquid crystal display (LCD), a loudspeaker, and a vibrator; a storage apparatus 1508 such as a magnetic tape, and a hard disk drive; and a communication apparatus 1509. The communication apparatus 1509 may allow the electronic device 1500 to wireless-communicate or wirecommunicate with other devices so as to exchange data. Although Fig. 15 shows the electronic device 1500 with various apparatuses, it should be understood that it is not required to implement or possess all the apparatuses shown. Alternatively, it may implement or possess the more or less apparatuses.

Specifically, according to the embodiment of the present disclosure, the process described above with reference to the flow diagram may be achieved as a computer software program. For example, an embodiment of the present disclosure includes a computer program product, it includes a computer program loaded on a nontransient computer-readable medium, and the computer program contains a program code for executing the method shown in the flow diagram. In such an embodiment, the computer program may be downloaded and installed from the network by the communication apparatus 1509, or installed from the storage apparatus 1508, or installed from ROM 1502. When the computer program is executed by the processing apparatus 1501, the above functions defined in the method in the embodiments of the present disclosure are executed.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to: display a performance task execution request list of a current live-stream room in response to a list displaying operation of a current user, wherein the performance task execution request list is configured to show at least part of performance task execution requests sent by audiences of the current live-stream room, and the performance task execution requests are used for requesting execution of performance tasks; and in response to a request processing operation, process a performance task execution request that the request processing operation targets.

The computer program code for executing the operation of the present disclosure may be written in one or more programming languages or combinations thereof, the above programming language includes but is not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The involved units described in the embodiments of the present disclosure may be achieved by a mode of software, or may be achieved by a mode of hardware. Herein, the name of the unit does not constitute a limitation for the unit itself in some cases.

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above.

According to one or more embodiments of the present disclosure, example 1 provides an interaction method, comprising: displaying a performance task execution request list of a current live-stream room in response to a list displaying operation of a current user, wherein the performance task execution request list is configured to show at least part of performance task execution requests sent by audiences of the current live-stream room, and the performance task execution requests are used for requesting execution of performance tasks; and in response to a request processing operation, processing a performance task execution request that the request processing operation targets.

According to one or more embodiments of the present disclosure, example 2 provides a method based on example 1, wherein the current user is a streamer; the at least part of performance task execution requests comprise a performance task execution request that has not been processed by the current user; and the in response to a request processing operation, processing a performance task execution request that the request processing operation targets comprises: in response to an accepting operation for a first performance task execution request shown in the performance task execution request list, undisplaying the first performance task execution request, and adding a first performance task to a first performance task list of the current live-stream room, wherein the first performance task is a performance task requested by the first performance task execution request to be executed; and the first performance task list is configured to show performance tasks to be executed of the current live-stream room.

According to one or more embodiments of the present disclosure, example 3 provides a method based on example 1, wherein the current user is an audience; the at least part of performance task execution requests comprise a performance task execution request that is sent by the current user and has not been processed by a streamer; and the in response to a request processing operation, processing a performance task execution request that the request processing operation targets comprises: in response to an undo operation for a second performance task execution request shown in the performance task execution request list, undisplaying the second performance task execution request.

According to one or more embodiments of the present disclosure, example 4 provides a method based on example 1, wherein the current user is a streamer; a target control is displayed in the performance task execution request list and configured to trigger enabling or disabling of a performance task execution authority of the current live-stream room; when the performance task execution authority is in an enabled state, the current live-stream room supports the audiences to send the performance task execution requests to the streamer; and when the performance task execution authority is in a disabled state, the current live-stream room does not support the audiences to send the performance task execution requests to the streamer.

According to one or more embodiments of the present disclosure, example 5 provides a method based on example 1, after the displaying a performance task execution request list of a current live-stream room, further comprising at least one of: in response to an enabling operation for the performance task execution authority, enabling the performance task execution authority of the current live-stream room, and showing performance task execution requests to be processed of the current live-stream room in the performance task execution request list; in response to a disabling operation for the performance task execution authority, disabling the performance task execution authority of the current live-stream room, and clearing the performance task execution request list.

According to one or more embodiments of the present disclosure, example 6 provides a method based on any one of examples 1 to 5, further comprising: in response to a panel displaying operation, displaying a performance panel, wherein the performance panel is configured to display at least one of a first performance task list, a second performance task list, and a list control of the current live-stream room; the second performance task list is configured to show a candidate performance task of the current live-stream room; and the list control is configured to trigger performing the list displaying operation.

According to one or more embodiments of the present disclosure, example 7 provides a method based on example 6, wherein the current user is a streamer; and after the displaying a performance panel, the interaction method further comprises: in response to an execution operation for a second performance task in the second performance task list, adding the second performance task to the first performance task list of the current live-stream room.

According to one or more embodiments of the present disclosure, example 8 provides a method based on example 6, wherein the current user is an audience; and after the displaying a performance panel, the interaction method further comprises: in response to an execution operation for a third performance task in the second performance task list, sending a third performance task execution request to a streamer, and adding the third performance task execution request to the performance task execution request list, wherein the third performance task execution request is used for requesting to execute the third performance task.

According to one or more embodiments of the present disclosure, example 9 provides a method based on example 6, wherein the current user is a streamer; and the interaction method further comprises: when the performance panel is in a display state, displaying a first performance task execution component, wherein the first performance task execution component is configured for the current user to control each performance task to be executed of the current live-stream room.

According to one or more embodiments of the present disclosure, example 10 provides a method based on example 6, wherein the current user is an audience; and the interaction method further comprises: when the performance panel is in a display state and a performance task to be executed corresponding to the current user is present in the first performance task list of the current live-stream room, displaying a second performance task execution component, wherein the second performance task execution component is configured to control the performance task to be executed of the current user.

According to one or more embodiments of the present disclosure, example 11 provides a method based on example 6, wherein the panel displaying operation acts on a performance panel control; and the interaction method further comprises: displaying the performance panel control in a live streaming page of the current live-stream room; or displaying the performance panel control in the live streaming page of the current live-stream room, and displaying current performance task information in the current live-stream room at an associated position of the performance panel control, wherein the current performance task information is task information of a currently executed performance task.

According to one or more embodiments of the present disclosure, example 12 provides a method based on example 11, wherein the current user is a streamer; and after the displaying current performance task information in the current live-stream room at an associated position of the performance panel control, the interaction method further comprises: in response to an undisplaying operation for the current performance task information, undisplaying the current performance task information, and controlling an audience terminal of each audience in the current live-stream room to underplay the current performance task information.

According to one or more embodiments of the present disclosure, example 13 provides a method based on example 11, wherein the current user is an audience; and after the displaying current performance task information in the current live-stream room at an associated position of the performance panel control, the interaction method further comprises: in response to an undisplaying operation for the current performance task information, undisplaying the current performance task information.

According to one or more embodiments of the present disclosure, example 14 provides a method based on example 11, wherein the performance panel control has different display styles when the performance task execution authority of the current live-stream room is in the enabled state and when the performance task execution authority of the current live-stream room is in the disabled state.

According to one or more embodiments of the present disclosure, example 15 provides an interaction apparatus, comprising: a list display module configured to, in response to a list displaying operation of a current user, display a performance task execution request list of a current live-stream room, wherein the performance task execution request list is configured to show at least part of performance task execution requests sent by audiences of the current live-stream room; and the performance task execution requests are used for requesting execution of performance tasks; and a request processing module configured to, in response to a request processing operation, process a performance task execution request that the request processing operation targets.

According to one or more embodiments of the present disclosure, example 16 provides an electronic device, comprising: at least one processor; and a memory in communication connection with the at least one processor, wherein the memory stores a computer program executable by the at least one processor; and the computer program is executed by the at least one processor to enable the at least one processor to perform the interaction method according to any one of examples 1 to 14.

According to one or more embodiments of the present disclosure, example 17 provides a computer-readable storage medium, storing computer instructions which, when executed by a processor, implement the interaction method according to any one of examples 1 to 14.

According to one or more embodiments of the present disclosure, example 18 provides a computer program product, comprising a computer program which, when executed by a processor, implements the interaction method according to any one of examples 1 to 14.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. An interaction method, comprising:
displaying a performance task execution request list of a current live-stream room in response to a list displaying operation of a current user, wherein the performance task execution request list is configured to show at least part of performance task execution requests sent by audiences of the current live-stream room, and the performance task execution requests are used for requesting execution of performance tasks; and
in response to a request processing operation, processing a performance task execution request that the request processing operation targets.

2. The interaction method according to claim 1, wherein the current user is a streamer; the at least part of performance task execution requests comprise a performance task execution request that has not been processed by the current user; and
the in response to a request processing operation, processing a performance task execution request that the request processing operation targets comprises:
in response to an accepting operation for a first performance task execution request shown in the performance task execution request list, undisplaying the first performance task execution request, and adding a first performance task to a first performance task list of the current live-stream room, wherein the first performance task is a performance task requested by the first performance task execution request to be executed; and the first performance task list is configured to show performance tasks to be executed of the current live-stream room.

3. The interaction method according to claim 1, wherein the current user is an audience; the at least part of performance task execution requests comprise a performance task execution request that is sent by the current user and has not been processed by a streamer; and
the in response to a request processing operation, processing a performance task execution request that the request processing operation targets comprises:
in response to an undo operation for a second performance task execution request shown in the performance task execution request list, undisplaying the second performance task execution request.

4. The interaction method according to claim 1 or 2, wherein the current user is a streamer; a target control is displayed in the performance task execution request list and configured to trigger enabling or disabling of a performance task execution authority of the current live-stream room; when the performance task execution authority is in an enabled state, the current live-stream room supports the audiences to send the performance task execution requests to the streamer; and when the performance task execution authority is in a disabled state, the current live-stream room does not support the audiences to send the performance task execution requests to the streamer.

5. The interaction method according to claim 4, after the displaying a performance task execution request list of a current live-stream room, further comprising at least one of:
in response to an enabling operation for the performance task execution authority, enabling the performance task execution authority of the current live-stream room, and showing performance task execution requests to be processed of the current live-stream room in the performance task execution request list;
in response to a disabling operation for the performance task execution authority, disabling the performance task execution authority of the current live-stream room, and clearing the performance task execution request list.

6. The interaction method according to any one of claims 1 to 5, further comprising:
in response to a panel displaying operation, displaying a performance panel, wherein the performance panel is configured to display at least one of a first performance task list, a second performance task list, and a list control of the current live-stream room; the second performance task list is configured to show a candidate performance task of the current live-stream room; and the list control is configured to trigger performing the list displaying operation.

7. The interaction method according to claim 6, wherein the current user is a streamer; and after the displaying a performance panel, the interaction method further comprises:
in response to an execution operation for a second performance task in the second performance task list, adding the second performance task to the first performance task list of the current live-stream room.

8. The interaction method according to claim 6, wherein the current user is an audience; and after the displaying a performance panel, the interaction method further comprises:
in response to an execution operation for a third performance task in the second performance task list, sending a third performance task execution request to a streamer, and adding the third performance task execution request to the performance task execution request list, wherein the third performance task execution request is used for requesting to execute the third performance task.

9. The interaction method according to claim 6, wherein the current user is a streamer; and the interaction method further comprises:
when the performance panel is in a display state, displaying a first performance task execution component, wherein the first performance task execution component is configured for the current user to control each performance task to be executed of the current live-stream room.

10. The interaction method according to claim 6, wherein the current user is an audience; and the interaction method further comprises:
when the performance panel is in a display state and a performance task to be executed corresponding to the current user is present in the first performance task list of the current live-stream room, displaying a second performance task execution component, wherein the second performance task execution component is configured to control the performance task to be executed of the current user.

11. The interaction method according to claim 6, wherein the panel displaying operation acts on a performance panel control; and the interaction method further comprises:
displaying the performance panel control in a live streaming page of the current live-stream room; or
displaying the performance panel control in the live streaming page of the current live-stream room, and displaying current performance task information in the current live-stream room at an associated position of the performance panel control, wherein the current performance task information is task information of a currently executed performance task.

12. The interaction method according to claim 11, wherein the current user is a streamer; and after the displaying current performance task information in the current live-stream room at an associated position of the performance panel control, the interaction method further comprises:
in response to an undisplaying operation for the current performance task information, undisplaying the current performance task information, and controlling an audience terminal of each audience in the current live-stream room to undisplay the current performance task information.

13. The interaction method according to claim 11, wherein the current user is an audience; and after the displaying current performance task information in the current live-stream room at an associated position of the performance panel control, the interaction method further comprises:
in response to an undisplaying operation for the current performance task information, undisplaying the current performance task information.

14. The interaction method according to claim 11, wherein the performance panel control has different display styles when the performance task execution authority of the current live-stream room is in the enabled state and when the performance task execution authority of the current live-stream room is in the disabled state.

15. An interaction apparatus, comprising:
a list display module configured to, in response to a list displaying operation of a current user, display a performance task execution request list of a current live-stream room, wherein the performance task execution request list is configured to show at least part of performance task execution requests sent by audiences of the current live-stream room; and the performance task execution requests are used for requesting execution of performance tasks; and
a request processing module configured to, in response to a request processing operation, process a performance task execution request that the request processing operation targets.

16. An electronic device, comprising:
at least one processor; and
a memory in communication connection with the at least one processor,
wherein the memory stores a computer program executable by the at least one processor; and the computer program is executed by the at least one processor to enable the at least one processor to perform the interaction method according to any one of claims 1 to 14.

17. A computer-readable storage medium, storing computer instructions which, when executed by a processor, implement the interaction method according to any one of claims 1 to 14.

18. A computer program product, comprising a computer program which, when executed by a processor, implements the interaction method according to any one of claims 1 to 14.
